# EUROPEAN PATENT APPLICATION

(11) **EP 4 722 559 A1**
(43) Date of publication of application: **08.04.2026**
(21) Application number: 25189240.2
(22) Date of filing: 14.07.2025
(51) Int. Cl.: F16G 13/06

(54) **BICYCLE CHAIN**

(30) Priority: 04.10.2024 JP 2024175163
(71) Applicant: Daido Kogyo Co., Ltd., Kaga-shi, Ishikawa 922-8686 (JP)
(72) Inventor: BABA, Jun, Kaga-shi, Ishikawa, 922-8686 (JP); KIKUCHI, Tatsuya, Kaga-shi, Ishikawa, 922-8686 (JP)
(74) Representative: TBK

(57) **Abstract**

A bicycle chain (1) includes a plurality of inner links (2) and a plurality of outer links (3) connected alternately. Each of the inner links (2) includes a pair of left and right inner plates (21), a pair of front and rear bushes (22), and a pair of front and rear rollers (23) externally fitted to the bushes (22). Each of the outer links (3) includes a pair of left and right outer plates (31), and a pair of front and rear pins (32) that connects the outer plates (31) in a state of being inserted into the bush (22). The outer plate (31) has a pair of front and rear pin holes (h2) into which opposite end portions of each pin (32) are press-fitted. The pin (32) is a cylindrical hollow pin having an inner diameter (R1) and an outer diameter (R2). A shear strength of the pin (32) is equal to or greater than each tensile strength of the inner plate (21) and the outer plate (31). An inner/outer diameter ratio obtained by dividing the inner diameter (R1) of the pin (32) by the outer diameter (R2) of the pin (32) is 0.2 or more and 0.65 or less.

## Description

### FIELD OF INVENTION

The present invention relates to a bicycle chain.

### BACKGROUND ART

Japanese Patent No. 7455378 is known as a type of bicycle chain. The bicycle chain disclosed in Japanese Patent No. 7455378 includes a plurality of inner links and a plurality of outer links connected alternately. The inner link includes a pair of inner plates, a cylindrical bush connecting the inner plates, and a roller externally fitted to the bush. The outer link includes a pair of outer plates disposed on an outer side of the inner plates, and a round bar-shaped pin that connects the outer plates in a state of being inserted into the bush.

The bicycle chain is used as a power transmission member that transmits a rotational force input from a rider on a bicycle via a pedal to a drive wheel. Such a bicycle chain is required to have strength required as a power transmission member. However, simply pursuing a higher strength may increase a weight of the bicycle chain. Use of heavy bicycle chains leads to an increased burden on the rider and is not preferable.

### SUMMARY OF THE INVENTION

The present invention has been made in view of the above circumstances, and an object of the present invention is to provide a bicycle chain enabling both strength and weight reduction to be secured.

In order to solve the above problem, a bicycle chain according to one aspect of the present invention includes a plurality of inner links and a plurality of outer links connected alternately. Each of the inner links includes a pair of inner plates, a cylindrical bush connecting the inner plates, and a roller externally fitted to the bush. Each of the outer links includes a pair of outer plates disposed at an outer side of the inner plates, and a pin inserted into the bush and having opposite end portions press-fitted into a pin hole formed in each of the outer plates to connect the outer plates. The pin is a cylindrical hollow pin having an inner diameter and an outer diameter. A shear strength of the pin is equal to or greater than each tensile strength of the inner plate and the outer plate. An inner/outer diameter ratio obtained by dividing the inner diameter of the pin by the outer diameter of the pin is 0.2 or more and 0.65 or less.

### BRIEF DESCRIPTION OF THE DRAWINGS

Fig. 1 is a partially broken plan view illustrating a structure of a bicycle chain according to an embodiment of the present invention.
Fig. 2 is a side view of the bicycle chain.
Fig. 3 is a partially exploded perspective view of the bicycle chain.
Fig. 4 is a cross-sectional view of a part of Fig. 1 in an enlarged manner.
Fig. 5 is an enlarged cross-sectional view of a pin and a bush.
Fig. 6 is a cross-sectional view illustrating a fitting portion between the pin and an outer plate in an enlarged manner.
Fig. 7 is a graph showing a relationship between an inner/outer diameter ratio of the pin and a chain weight ratio.
Fig. 8 is a graph showing a relationship between the inner/outer diameter ratio and a shear strength of the pin.
Fig. 9 is a graph showing a relationship between the inner/outer diameter ratio and a bending stress of the pin.

### DETAILED DESCRIPTION

Hereinafter, a bicycle chain according to a preferred embodiment of the present invention will be described with reference to the drawings. The bicycle chain of the present invention is used as a power transmission member that transmits a rotational force input from a rider on a bicycle via a pedal to a drive wheel such as a rear wheel, for example. For example, the bicycle chain is wound between a chain ring connected to the pedal via a crank and a sprocket fixed to an axle of the drive wheel. As a result, a force of pedaling by the rider is converted into a rotational force of the chain ring, and the rotational force of the chain ring is transmitted to the sprocket or the drive wheel via the bicycle chain.

### [Structure of Bicycle Chain]

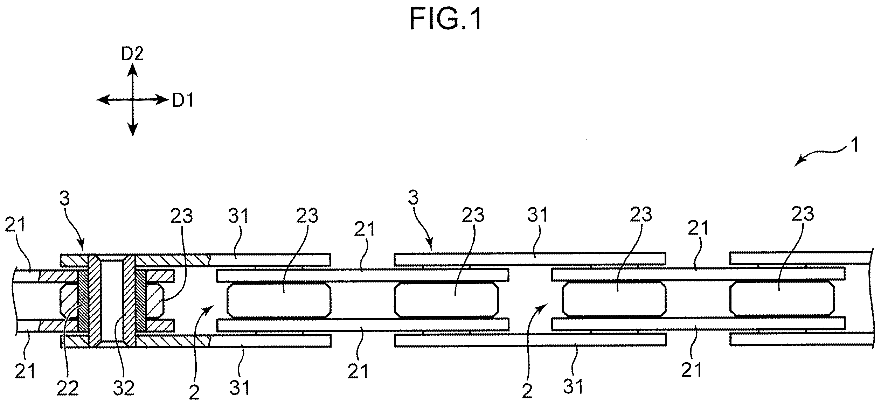

Figs. 1 to 3 are a partially broken plan view, a side view, and a partially exploded perspective view illustrating a structure of a bicycle chain 1 according to an embodiment of the present invention. As shown in this drawings, the bicycle chain 1 includes a plurality of inner links 2 and a plurality of outer links 3 connected alternately. The bicycle chain 1 is formed in an endless shape in a use state of being wound between the chain ring and the sprocket described above. In order to make the bicycle chain 1 endless, one end and the other end of a connecting body obtained by alternately connecting the inner links 2 and the outer links 3 are connected to each other via a coupling link (not illustrated). Although the type of bicycle to which the bicycle chain 1 can be applied is not particularly limited, in the present embodiment, the bicycle chain 1 is assumed to be applied to a single-speed bicycle not including a transmission. As will be described in detail later, since the bicycle chain 1 of the present embodiment has both strength and lightness, the bicycle chain 1 of the present embodiment can be suitably applied in particular to a single-speed racing bicycle for use in track competition or the like.

Hereinafter, a direction in which the inner link 2 and the outer link 3 are arranged is defined as a front-rear direction D1 of the bicycle chain 1. Furthermore, a direction orthogonal to the front-rear direction D1 in a plan view illustrated in Fig. 1 is defined as a width direction D2 of the bicycle chain 1. The width direction D2 is synonymous with a left-right direction.

The inner link 2 includes a pair of left and right inner plates 21, a pair of front and rear bushes 22 connecting both the inner plates 21, and a pair of front and rear rollers 23 externally fitted to the bushes 22. The components 21, 22, and 23 of the inner link 2 are made of a metal material such as carbon steel or stainless steel. A coating such as various types of plating may be formed on surfaces of the metal materials constituting the components 21, 22, and 23.

The outer link 3 includes a pair of left and right outer plates 31 and a pair of front and rear pins 32 connecting the outer plates 31. The components 31 and 32 of the outer link 3 are made of a metal material such as carbon steel or stainless steel. A coating such as various types of plating may be formed on surfaces of the metal materials constituting the components 31 and 32.

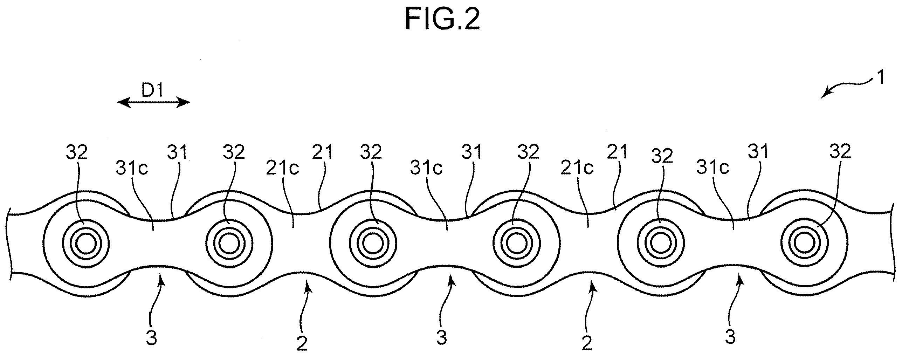

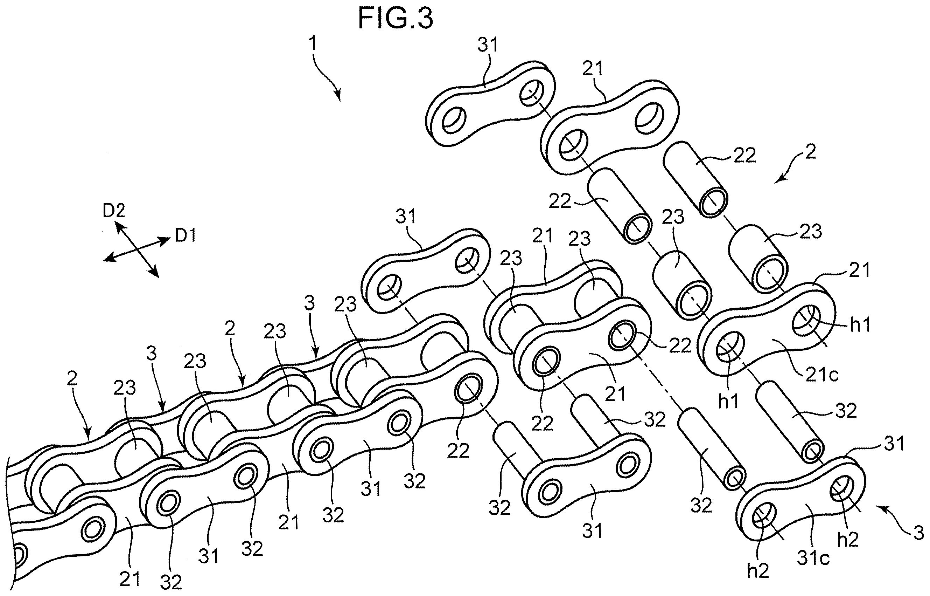

The pair of inner plates 21 is disposed so as to be opposed to each other in the width direction D2. The inner plate 21 has a plate shape having a constant thickness in the width direction D2 and extending in the front-rear direction D1. The inner plate 21 is formed in a gourd shape having a constricted portion 21c at the center in the front-rear direction D1 in a side view illustrated in Fig. 2. A pair of bush holes h1 (Fig. 3) penetrating the inner plate 21 is formed in front and rear of the constricted portion 21c of the inner plate 21.

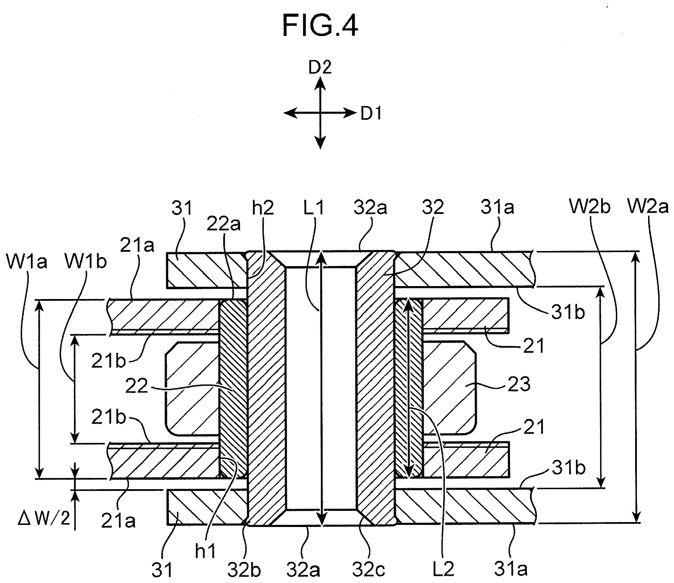

The pair of bushes 22 is disposed side by side in the front-rear direction D1 between the pair of inner plates 21. The bush 22 is formed in a cylindrical shape whose axis extends in the width direction D2. Fig. 4 is a cross-sectional view of a part of Fig. 1 in an enlarged manner. As illustrated in Fig. 4 and the like, the bush 22 has opposite end portions inserted (press-fitted) into the bush holes h1 of the pair of inner plates 21 in a tightly interfitted state. In other words, the opposite end portions of the bush 22 are press-fitted into the front and rear bush holes h1 of the pair of inner plates 21, so that the pair of inner plates 21 is connected via the bush 22. An axial length L2 of the bush 22, which is a distance from one end to the other end in an axial direction (width direction D2) of the bush 22, substantially coincides with an outer width W1a of the inner plates 21 (Fig. 4), which is a distance between outer side surfaces 21a of the pair of inner plates 21. In other words, the bush 22 is press-fitted into the bush hole h1 of the inner plate 21 with its axial end surface 22a substantially flush with the outer side surface 21a of the inner plate 21.

The pair of rollers 23 is formed in a cylindrical shape surrounding outer peripheries of the pair of bushes 22. In other words, the bush 22 is inserted into the roller 23 in a clearance fitted state. The roller 23 has an axial length, which is a distance from one end to the other end in an axial direction (width direction D2) of the roller 23, is slightly smaller than an inner width W1b of the inner plates 21, which is a distance between inner side surfaces 21b of the pair of inner plates 21. When the bicycle chain 1 is driven, each tooth surface of the chain ring and the sprocket described above collides with and slides on an outer peripheral surface of the roller 23.

The pair of outer plates 31 is disposed on an outer side of the pair of inner plates 21 in the width direction D2. In other words, the pair of outer plates 31 is disposed so as to be opposed to each other in the width direction D2 across the pair of inner plates 21. The outer plate 31 has an outer shape similar to that of the inner plate 21. In other words, the outer plate 31 has a plate shape having a constant thickness in the width direction D2 and extending in the front-rear direction D1. The outer plate 31 is formed in a gourd shape having a constricted portion 31c at the center in the front-rear direction D1 in the side view illustrated in Fig. 2. A pair of pin holes h2 (Fig. 3) penetrating the outer plate 31 is formed in front and rear of the constricted portion 31c of the outer plate 31.

As illustrated in Fig. 4, an inner width W2b of the outer plates 31, which is a distance between inner side surfaces 31b of the pair of outer plates 31, is slightly larger than the outer width W1a of the inner plates 21 described above. Specifically, in the present embodiment, a total clearance ΔW obtained by subtracting the outer width W1a of the inner plates 21 from the inner width W2b of the outer plates 31 is set to 0.02 mm or more and 0.5 mm or less. In Fig. 4, a one-side clearance (ΔW/2) that is a half of the total clearance ΔW is shown for convenience.

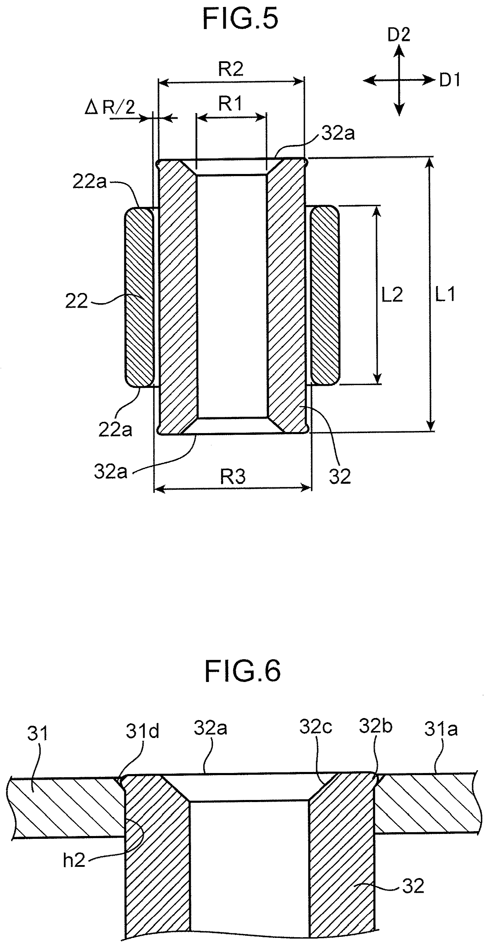

The pair of pins 32 is disposed side by side in the front-rear direction D1 between the pair of outer plates 31. Fig. 5 is a cross-sectional view illustrating the pin 32 and the bush 22 extracted from Fig. 4. As illustrated in Figs. 1 to 5, the pin 32 is formed in a cylindrical shape having an axis extending in the width direction D2. In other words, the pin 32 is a cylindrical hollow pin having an inner diameter R1 and an outer diameter R2 (Fig. 5). The pin 32 has opposite end portions inserted (press-fitted) into the pin holes h2 of the pair of outer plates 31 in a tightly interfitted state. In other words, the opposite end portions of the pin 32 are press-fitted into the front and rear pin holes h2 of the pair of outer plates 31, so that the pair of outer plates 31 is connected via the pin 32.

The outer diameter R2 of the pin 32 is set to 3.5 mm or more and 4.0 mm or less. In addition, an inner/outer diameter ratio (R1/R2) obtained by dividing the inner diameter R1 of the pin 32 by the outer diameter R2 of the pin 32 is set to 0.2 or more and 0.65 or less.

The pin 32 is made of a material having a tensile strength of 1500 MPa or more. There are various kinds of such materials, and for example, an S45C temper material obtained by tempering a carbon steel material for machine structure (S45C) defined in JIS G4051 can be used as the material of the pin 32. The pin 32 having such tensile strength has a sufficiently high shear strength by setting its dimension to the above-described range (R2 = 3.5 to 4.0 mm, R1/R2 = 0.2 to 0.65) even though it is a hollow pin. Specifically, the shear strength of the pin 32 is equal to or greater than each tensile strength of the inner plate 21 and the outer plate 31. In other words, in the present embodiment, the pin 32 is set to have the material and the size such that the shear strength of the pin 32 is not lower than each tensile strength of the inner plate 21 and the outer plate 31.

The pin 32 is inserted into the bush 22 in a clearance fitted state. In other words, as shown in Fig. 5, the outer diameter R2 of the pin 32 is slightly smaller than an inner diameter R3 of the bush 22. Specifically, in the present embodiment, a total clearance ΔR obtained by subtracting the outer diameter R2 of the pin 32 from the inner diameter R3 of the bush 22 is set to more than 0 mm and 0.04 mm or less. In Fig. 5, for convenience, a one-side clearance (ΔR/2) that is a half of the total clearance ΔR is indicated, and the one-side clearance is indicated to be larger than the actual one.

The pin 32 has an axial length L1 larger than the axial length L2 of the bush 22, the axial length L1 being a distance from one end to the other end in an axial direction (width direction D2) of the pin 32. In other words, the pin 32 is inserted into the bush 22 with the opposite end portions thereof protruding from the end surface 22a of the bush 22. The opposite end portions of the pin 32 protruding from the end surface 22a of the bush 22 extend to positions corresponding to the outer side surfaces 31a of the outer plates 31 and are press-fitted into the pin holes h2 (Fig. 4).

As illustrated in Fig. 4, the axial length L1 of the pin 32 substantially coincides with an outer width W2a of the outer plates 31, which is a distance between the outer side surfaces 31a of the pair of outer plates 31. In other words, the pin 32 is press-fitted into the pin hole h2 of the outer plate 31 with its axial end surface 32a substantially flush with the outer side surface 31a of the outer plate 31.

Specifically, in the present embodiment, the axial length L1 of the pin 32 and the outer width W2a of the outer plates 31 substantially matching with each other means that an error therebetween is 5% or less. In other words, when a value obtained by dividing the axial length L1 of the pin 32 by the outer width W2a of the outer plates 31 is defined as an outer width matching rate, in the present embodiment, the outer width matching rate (L1/W2a) is set to 0.95 or more and 1.05 or less.

Fig. 6 is a cross-sectional view illustrating a fitting portion between the pin 32 and the outer plate 31 in an enlarged manner. As illustrated in Figs. 4 and 6, the pin 32 has a caulking portion 32b and a tapered portion 32c at the opposite end portions in the axial direction (width direction D2) thereof. The caulking portion 32b is a fine protrusion formed on outer peripheral surfaces of the opposite end portions of the pin 32, and is formed to slightly expand radially outward from an outer peripheral surface of a straight portion of the pin 32 excluding the caulking portion 32b. The tapered portion 32c is a chamfered portion formed on an inner peripheral surface of each of the opposite end portions of the pin 32, and is formed to have an inner diameter increasing toward the end surface 32a of the pin 32 (toward the outer side in the width direction D2). Note that the outer diameter R2 of the pin 32 described above is an outer diameter of the straight portion of the pin 32 excluding the caulking portion 32b.

The caulking portion 32b is formed by caulking for pressing the opposite end portions of the pin 32 at the time of assembling the bicycle chain 1. In other words, by the caulking, a pressing force in a direction of compressing the pin 32 acts on the opposite end portions of the pin 32. As a result, the opposite end portions of the pin 32 are expanded to form the caulking portion 32b.

An enlarged diameter portion 31d (Fig. 6) for receiving the caulking portion 32b during the caulking described above is formed at an outer end portion of the pin hole h2 of the outer plate 31 in the width direction D2. The enlarged diameter portion 31d is formed so as to have an inner diameter increasing toward the outer side surface 31a of the outer plate 31.

### [Operation and Effect]

As described above, in the present embodiment, a cylindrical hollow pin having the outer diameter R2 of 3.5 mm or more and 4.0 mm or less and the inner/outer diameter ratio (R1/R2) of 0.2 or more and 0.65 or less is used as the pin 32 of the bicycle chain 1. In addition, the shear strength of the pin 32 is set to be equal to or greater than each tensile strength of the inner plate 21 and the outer plate 31. Such a configuration has an advantage in enabling both strength and weight reduction of the bicycle chain 1 to be secured.

In other words, in the present embodiment, since the pin 32 is a cylindrical hollow pin, a weight of the pin 32 and thus a weight of the bicycle chain 1 can be reduced as compared with a conventional bicycle chain using a round bar-shaped solid pin without a cavity. Moreover, since the shear strength of the pin 32 is equal to or greater than the tensile strength of each of the inner plate 21 and the outer plate 31, the pin 32 is not ruptured earlier than the inner plate 21 or the outer plate 31 when the bicycle chain 1 is driven. In other words, according to the present embodiment, a chain strength, which is a tensile strength of the entire bicycle chain 1, does not substantially decrease while the pin 32 is hollowed for weight reduction. This makes it possible to secure both strength and weight reduction of the bicycle chain 1.

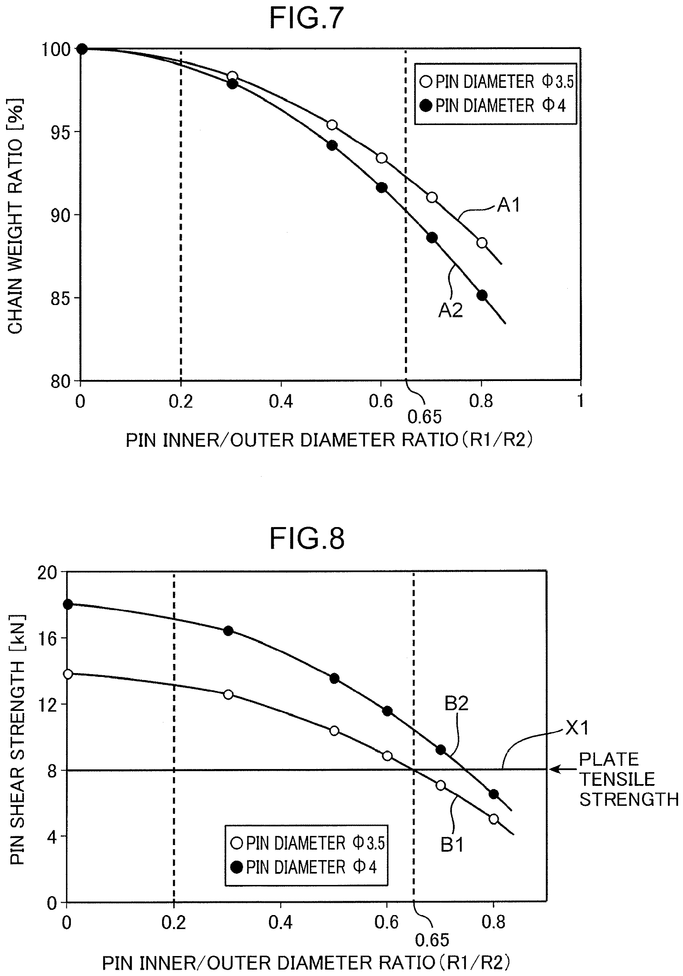

Fig. 7 is a graph showing a relationship between the inner/outer diameter ratio (R1/R2) of the pin 32 and a chain weight ratio. The chain weight ratio is a weight ratio when a weight of a bicycle chain using a round bar-shaped solid pin is 100. Fig. 7 illustrates two waveforms A1 and A2 as a relationship between the inner/outer diameter ratio and the chain weight ratio. The waveform A1 shows a relationship between the inner/outer diameter ratio and the chain weight ratio when the outer diameter R2 of the pin 32 is 3.5 mm, which is a lower limit, and the waveform A2 shows a relationship between the inner/outer diameter ratio and the chain weight ratio when the outer diameter R2 of the pin 32 is 4.0 mm, which is an upper limit. As understood from the waveforms A1 and A2, the chain weight ratio decreases as the inner/outer diameter ratio increases, i.e., as the inner diameter R1 increases with respect to the outer diameter R2 of the pin 32. In particular, in a case where the outer diameter R2 of the pin 32 is 4.0 mm (waveform A2), the chain weight ratio decreases to about 90% under a condition that the inner/outer diameter ratio is set to the upper limit of 0.65. In other words, weight reduction of about 10% is achieved in comparison to a conventional type bicycle chain. In a case (waveform A1) in which the outer diameter R2 of the pin 32 is 3.5 mm, under the condition that the inner/outer diameter ratio is 0.65, while a weight reduction range is smaller than 10%, 7% or more is secured. On the other hand, when the inner/outer diameter ratio decreases to the lower limit of 0.2, weight reduction of 1% or more is achieved regardless of whether the outer diameter R2 of the pin 32 is 3.5 mm or 4.0 mm. Thus, according to the graph of Fig. 7, it is understood that the chain weight can be reduced by at least 1% and at most about 10% by making the pin 32 hollow and then setting the inner/outer diameter ratio to the range of 0.2 to 0.65 without modifying the components other than the pin 32.

Fig. 8 is a graph showing a relationship between the inner/outer diameter ratio and the shear strength (kN) of the pin 32. A waveform B1 shows a relationship when the outer diameter R2 of the pin 32 is 3.5 mm, and a waveform B2 shows a relationship when the outer diameter R2 of the pin 32 is 4.0 mm. The material of the pin 32 is an S45C temper material, and the tensile strength of the pin 32 is 1500 MPa or more. A line X1 in the graph of Fig. 8 represents a plate tensile strength (kN) which is the tensile strength of each of the inner plate 21 and the outer plate 31. The inner plate 21 and the outer plate 31 are made of materials corresponding to S45C, and the tensile strengths of both the plates are equivalent to 1400 MPa. In other words, the plate tensile strength X1 (kN) referred to herein is common to the inner plate 21 and the outer plate 31. In a case where the tensile strength of the inner plate 21 is different from the tensile strength of the outer plate 31, the larger tensile strength is the plate tensile strength X1. As shown by the waveforms B1 and B2, the shear strength (kN) of the pin 32 decreases as the inner/outer diameter ratio increases, i.e., as the inner diameter R1 increases with respect to the outer diameter R2 of the pin 32. In particular, in the case where the outer diameter R2 of the pin 32 is 3.5 mm (waveform B1), the shear strength of the pin 32 decreases to a value corresponding to the plate tensile strength X1 under the condition that the inner/outer diameter ratio is 0.65, which is the upper limit. In the case where the outer diameter R2 of the pin 32 is 4.0 mm (waveform B2), the shear strength of the pin 32 exceeds the plate tensile strength X1 even when the inner/outer diameter ratio is 0.65. In other words, by keeping the inner/outer diameter ratio of the pin 32 at 0.65 or less, regardless of whether the outer diameter R2 of the pin 32 is 3.5 mm or 4.0 mm, a shear strength at least equal to or greater than the plate tensile strength X1 is imparted to the pin 32. In addition, in the case where the inner/outer diameter ratio of the pin 32 is reduced to 0.2, a shear strength not much different from a case where a solid pin is used is imparted to the pin 32.

From the foregoing, it has been confirmed that when the inner/outer diameter ratio of the hollow cylindrical pin 32 is set to 0.2 to 0.65, the shear strength of the pin 32 can be made equal to or greater than each tensile strength (plate tensile strength X1) of the inner plate 21 and the outer plate 31 while a general steel material called an S45C temper material is used as the material of the pin 32. In other words, it has been confirmed that even when the pin 32 is made hollow for weight reduction, a shear strength equal to or greater than the tensile strength of the inner plate 21 and the outer plate 31 can be imparted to the pin 32 depending on setting of the inner/outer diameter ratio and the material of the pin 32, whereby a necessary chain strength can be secured. From the foregoing, the configuration of the present embodiment is effective in securing both strength and weight reduction of the bicycle chain 1.

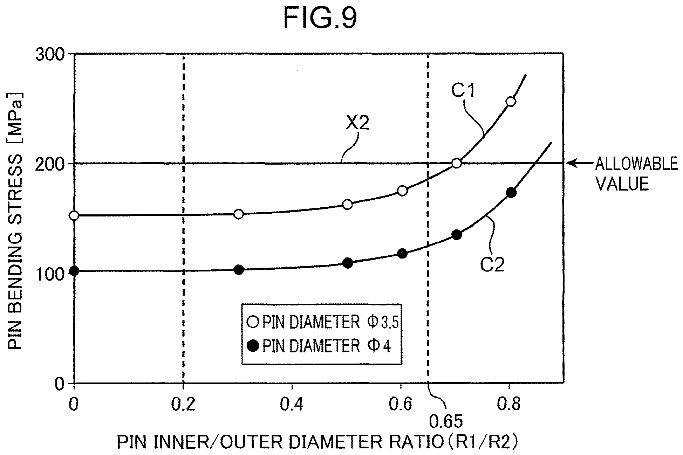

In addition, the configuration of the present embodiment has no problem from the viewpoint of a bending stress applied to the pin 32. Fig. 9 is a graph showing a relationship between the inner/outer diameter ratio and a bending stress (MPa) of the pin 32. A waveform C1 shows a relationship when the outer diameter R2 of the pin 32 is 3.5 mm, and a waveform C2 shows a relationship when the outer diameter R2 of the pin 32 is 4.0 mm. The other conditions are the same as those in Fig. 8. In addition, a line X2 in the graph of Fig. 9 represents an allowable value of the bending stress decided from design requirements and the like. As is clear from the relationship between the waveforms C1 and C2 and the allowable value X2, regardless of whether the outer diameter R2 of the pin 32 is 3.5 mm or 4.0 mm, the bending stress of the pin 32 falls below the allowable value X2 as long as the inner/outer diameter ratio of the pin 32 is in the range of 0.2 to 0.65. From this, it is understood that setting the inner/outer diameter ratio of the pin 32 to 0.2 to 0.65 leads to securing the strength of the pin 32 or the bicycle chain 1.

Here, as illustrated in Fig. 7, although the weight reduction range of the bicycle chain 1 when the inner/outer diameter ratio of the pin 32 is 0.2 remains at about 1%, in a case where the inner/outer diameter ratio of the pin 32 increases to 0.4, the weight reduction range expands to about 3%. Therefore, from the viewpoint of weight reduction, the lower limit of the inner/outer diameter ratio of the pin 32 is preferably set to 0.4. In other words, the inner/outer diameter ratio of the pin 32 is 0.2 or more and 0.65 or less, and preferably 0.4 or more and 0.65 or less. When the inner/outer diameter ratio of the pin 32 is set to 0.4 to 0.65 as in the latter case, the bicycle chain 1 can be further reduced in weight, and a burden on a rider riding the bicycle can be reduced.

In the present embodiment, the outer width matching rate (L1/W2a) obtained by dividing the axial length L1 of the pin 32 by the outer width W2a of the outer plates 31 is set to 0.95 or more and 1.05 or less. According to such a configuration, since the end surface 32a of the pin 32 and the outer side surface 31a of the outer plate 31 are flush with each other or nearly flush with each other, it is possible to reduce air resistance generated in the bicycle chain 1 when the bicycle chain 1 is driven, i.e., when the bicycle travels. This can reduce travel resistance of the bicycle and reduce the burden on the rider.

Furthermore, in the present embodiment, the caulking portions 32b expanding radially outward are formed on the outer peripheral surfaces of the opposite end portions of the pin 32, and the tapered portions 32c having the inner diameter increasing toward the end surface 32a of the pin 32 are formed on the inner peripheral surfaces of the opposite end portions of the pin 32. Thus, when the caulking portions 32b are formed on the outer peripheral surfaces of the opposite end portions of the pin 32, it is possible to prevent the pin 32 from coming out of the pin hole h2 of the outer plate 31 by the caulking portions 32b, and it is possible to enhance a coupling strength between the pin 32 and the outer plate 31. In addition, since the tapered portions 32c are formed on the inner peripheral surfaces of the opposite end portions of the pin 32, the opposite end portions of the pin 32 can be relatively easily expanded radially and deformed at the time of caulking for applying a pressing force in a compression direction to the opposite end portions of the pin 32, and the caulking portion 32b can be accurately formed. Furthermore, as a result of the opposite end portions of the pin 32 being compressed and deformed by caulking, a state where the end surface 32a of the pin 32 and the outer side surface 31a of the outer plate 31 are substantially flush with each other is easily obtained, and the above-described range of the outer width matching rate (L1/W2a = 0.95 to 1.05) can be easily realized.

In addition, in the present embodiment, the total clearance ΔR obtained by subtracting the outer diameter R2 of the pin 32 from the inner diameter R3 of the bush 22 is set to more than 0 mm and 0.04 mm or less. Thus, in the case where the radial clearance between the bush 22 and the pin 32 is sufficiently reduced, the pin 32 is well restrained by the bush 22. As a result, the bending of the pin 32 can be suppressed, and the bending stress applied to the pin 32 can be reduced.

In addition, in the present embodiment, the total clearance ΔW obtained by subtracting the outer width W1a of the inner plates 21 from the inner width W2b of the outer plates 31 is set to 0.02 mm or more and 0.5 mm or less. Thus, when the clearance in the width direction D2 between the inner plate 21 and the outer plate 31 is made sufficiently small, the state where the inner plate 21 and the outer plate 31 are substantially parallel to each other is favorably maintained, and as a result, the bending of the pin 32 can be suppressed, and the bending stress applied to the pin 32 can be reduced.

### [Modification]

Although the preferred embodiment of the present invention has been described above, the present invention is not limited to the above embodiment, and various modifications can be made without departing from the gist of the present invention. For example, in the above embodiment, the bicycle chain 1 is applied to a single-speed bicycle not including a transmission. However, an application destination of the bicycle chain of the present invention is not limited to this, and as a matter of course, can be applied to a multi-speed bicycle including a transmission.

### [Conclusion]

The above-described embodiment and the modifications thereof can be summarized as follows.

The bicycle chain includes a plurality of inner links and a plurality of outer links connected alternately. Each of the inner links includes a pair of inner plates, a cylindrical bush connecting the inner plates, and a roller externally fitted to the bush. Each of the outer links includes a pair of outer plates disposed at an outer side of the inner plates, and a pin inserted into the bush and having opposite end portions press-fitted into a pin hole formed in each of the outer plates to connect the outer plates. The pin is a cylindrical hollow pin having an inner diameter and an outer diameter. A shear strength of the pin is equal to or greater than each tensile strength of the inner plate and the outer plate. An inner/outer diameter ratio obtained by dividing the inner diameter of the pin by the outer diameter of the pin is 0.2 or more and 0.65 or less.

In this aspect, since the pin connecting the outer plates is a cylindrical hollow pin, a weight of the pin and thus a weight of the bicycle chain can be reduced as compared with a conventional bicycle chain using a round bar-shaped solid pin, for example. Moreover, since the shear strength of the pin is equal to or greater than each tensile strength of the inner plate and the outer plate, the chain strength, which is the tensile strength of the entire bicycle chain, does not substantially decrease while the pin is made hollowed as described above. In other words, as a result of intensive studies, the inventors of the present application have obtained findings that even when the pin is made hollow for weight reduction, a shear strength equal to or greater than each tensile strength of the inner plate and the outer plate can be imparted to the pin depending on setting of the inner/outer diameter ratio and the material of the pin, whereby a necessary chain strength can be secured. Based on such findings, in the present invention, a cylindrical hollow pin having the inner/outer diameter ratio of 0.2 to 0.65 and having a shear strength equal to or greater than each tensile strength of the inner plate and the outer plate is used. This makes it possible to secure both strength and weight reduction of the bicycle chain.

Preferably, the inner/outer diameter ratio is 0.4 or more and 0.65 or less.

In this aspect, the bicycle chain can be further reduced in weight, and a burden on a rider riding a bicycle can be reduced.

Preferably, an outer width matching rate obtained by dividing an axial length of the pin by an outer width of the outer plates is 0.95 or more and 1.05 or less.

In this aspect, since the end surface of the pin and the outer side surface of the outer plate are flush with each other or nearly flush with each other, it is possible to reduce air resistance generated in the bicycle chain when the bicycle chain is driven, i.e., when the bicycle travels. This can reduce travel resistance of the bicycle and reduce the burden on the rider.

Preferably, a caulking portion expanding radially outward is formed on an outer peripheral surface of each of opposite end portions of the pin, and a tapered portion having an inner diameter increasing toward an end surface of the pin is formed on an inner peripheral surface of each of the opposite end portions of the pin.

In this aspect, since the caulking portions are formed on the outer peripheral surfaces of the opposite end portions of the pin, it is possible to prevent the pin from coming out of the pin hole of the outer plate by the caulking portions, and it is possible to enhance a coupling strength between the pin and the outer plate. In addition, since the tapered portions are formed on the inner peripheral surfaces of the opposite end portions of the pin, the opposite end portions of the pin can be relatively easily expanded radially and deformed at the time of caulking for applying a pressing force in a compression direction to the opposite end portions of the pin, and the caulking portion can be accurately formed. Furthermore, as a result of the opposite end portions of the pin being compressed and deformed by caulking, a state where the end surface of the pin and the outer side surface of the outer plate are substantially flush with each other is easily obtained, and the above-described range of the outer width matching rate (0.95 to 1.05) can be easily realized.

Preferably, the pin is made of a material having a tensile strength of 1500 MPa or more.

In this aspect, it is possible to impart a shear strength equal to or greater than each tensile strength of the inner plate and the outer plate to the pin while using a general steel material such as a S45C temper material, for example, as the material of the pin.

Preferably, a total clearance obtained by subtracting the outer diameter of the pin from an inner diameter of the bush is more than 0 mm and 0.04 mm or less.

Thus, in the case where the radial clearance between the bush and the pin is sufficiently reduced, the pin is well restrained by the bush. As a result, the bending of the pin can be suppressed, and the bending stress applied to the pin can be reduced.

Preferably, a total clearance obtained by subtracting an outer width of the inner plates from an inner width of the outer plates is 0.02 mm or more and 0.5 mm or less.

Thus, when a clearance in a width direction between the inner plate and the outer plate is made sufficiently small, the state where the inner plate and the outer plate are substantially parallel to each other is favorably maintained, and as a result, the bending of the pin can be suppressed, and the bending stress applied to the pin can be reduced.

## Claims

1. A bicycle chain comprising: a plurality of inner links (2) and a plurality of outer links (3) connected alternately, wherein
each of the inner links (2) includes a pair of inner plates (21), a cylindrical bush (22) connecting the inner plates (21), and a roller (23) externally fitted to the bush (22),
each of the outer links (3) includes a pair of outer plates (31) disposed at an outer side of the inner plates (21), and a pin (32) inserted into the bush (22) and having opposite end portions press-fitted into a pin hole (h2) formed in each of the outer plates (31) to connect the outer plates (31),
the pin (32) is a cylindrical hollow pin having an inner diameter (R1) and an outer diameter (R2),
a shear strength of the pin (32) is equal to or greater than each tensile strength of the inner plate (21) and the outer plate (31), and
an inner/outer diameter ratio obtained by dividing the inner diameter (R1) of the pin (32) by the outer diameter (R2) of the pin (32) is 0.2 or more and 0.65 or less.

2. The bicycle chain according to claim 1, wherein
the inner/outer diameter ratio is 0.4 or more and 0.65 or less.

3. The bicycle chain according to claim 1 or 2, wherein
an outer width matching rate obtained by dividing an axial length (L1) of the pin (32) by an outer width (W2a) of the outer plates (31) is 0.95 or more and 1.05 or less.

4. The bicycle chain according to claim 3, wherein
a caulking portion (32b) expanding radially outward is formed on an outer peripheral surface of each of opposite end portions of the pin (32), and
a tapered portion (32c) having an inner diameter increasing toward an end surface (32a) of the pin (32) is formed on an inner peripheral surface of each of the opposite end portions of the pin (32).

5. The bicycle chain according to any one of claims 1 to 4, wherein
the pin (32) is made of a material having a tensile strength of 1500 MPa or more.

6. The bicycle chain according to any one of claims 1 to 5, wherein
a total clearance (ΔR) obtained by subtracting the outer diameter (R2) of the pin (32) from an inner diameter (R3) of the bush (22) is more than 0 mm and 0.04 mm or less.

7. The bicycle chain according to any one of claims 1 to 6, wherein
a total clearance (ΔW) obtained by subtracting an outer width (W1a) of the inner plates (21) from an inner width (W2b) of the outer plates (31) is 0.02 mm or more and 0.5 mm or less.
